# EUROPEAN PATENT APPLICATION

(11) **EP 2 873 817 A1**
(43) Date of publication of application: **20.05.2015**
(21) Application number: 13808617.8
(22) Date of filing: 12.06.2013
(51) Int. Cl.: F01N 3/023, B01D 39/14, B01D 39/20, B01D 53/94, B01J 23/50, B01J 35/04, F01N 3/02, F01N 3/025, F01N 3/029, F01N 3/10, F01N 3/36

(54) **DIESEL PARTICULATE FILTER AND EXHAUST GAS PURIFICATION DEVICE**

(30) Priority: 28.06.2012 JP 2012145301
(71) Applicant: Mitsui Mining and Smelting Co., Ltd., Shinagawa-ku Tokyo 141-8584 (JP)
(72) Inventor: KOGAWA, Takahiro, Tokyo 141-8584 (JP); DAIDO, Ataru, Tokyo 141-8584 (JP)
(74) Representative: Gille Hrabal
(86) International application number: PCT/JP2013/066241
(87) International publication number: WO 2014/002772

(57) **Abstract**

Provided is a novel diesel particulate filter (DPF) having a structure in which a silver catalyst layer containing silver as a catalyst active component is formed on the surface of a filter base material with which a circulating exhaust gas comes into contact, whereby the diffusivity of the silver can be suppressed, and stable particulate matter (PM) combustion capacity can be achieved, in particular, at a high temperature. The DPF is equipped with a structure in which a silver catalyst layer, which includes a silver alloy containing silver and palladium as the catalyst active component, is formed on a partial or entire surface of each dividing wall which is located at an inflow side of the exhaust gas.

## Description

### TECHNICAL FIELD

The present invention relates to an internal combustion engine and, more particularly, to a diesel particulate filter (DPF) for purifying an exhaust gas emitted from a diesel engine, and an exhaust gas purification device using the same.

### BACKGROUND ART

Exhaust gases emitted from diesel engines contain sulfate based on a sulfur content in fuel, tarry particulate matter (PM) resulting from incomplete combustion, nitrogen oxides (NOx), and the like.

As a device for removing the PM contained in the exhaust gas of the diesel engine, an exhaust gas purification device for collecting the PM using a diesel particulate filter (DPF) and burning away the collected PM with proper timing is known.

Such a DPF is typically designed such that a porous filter base material exhibiting a honeycomb structure makes up a framework, and when the exhaust gas circulates inside dividing walls of the base material, the PM is collected by surfaces of the dividing walls.

Meanwhile, it has recently been proposed in this type of DPF that silver is used as a catalyst active component in place of expensive platinum.

For example, a method of purifying an engine exhaust gas is disclosed in Patent Document 1 (JP 2003-286835 A), in which granular or monolithic denitration and oxidation catalysts loading titan and silver on γ-alumina are disposed in series on an exhaust passage of the engine exhaust gas, and the engine exhaust gas is brought into contact with the denitration catalyst under the presence of a fuel reductant extracting a part of fuel and is then brought into contact with the oxidation catalyst.

An exhaust gas purification catalyst is disclosed in Patent Document 2 (JP 2007-196135 A), which purifies particulate matter contained in an exhaust gas emitted from an internal combustion engine and is formed by firing boehmite on which silver is loaded.

A structure for purifying a diesel exhaust gas is disclosed in Patent Document 3 (JP 2007-315328 A), which includes an exhaust gas pipe connected to an diesel engine, a PM purification material that is disposed on an exhaust gas passage in the exhaust gas pipe and has an oxidation catalyst containing ceria and silver, and an NOx purification material that is disposed on the exhaust gas passage in the exhaust gas pipe and has an NOx selective reduction-type catalyst containing a zeolite and a transition metal loaded on the zeolite.

An exhaust gas purification device for a diesel engine is disclosed in Patent Document 4 (JP 2009-513335 W), which is inserted into an exhaust passage of the diesel engine and in which an NOx lowering catalyst section on which a silver (Ag) component, a copper (Cu) component, or a mixture thereof are loaded, and a particle removal filter section on which a platinoid catalyst having one or more selected from the group consisting of Pt, Pd, Ir, and Rh is loaded are sequentially provided from upstream with respect to a flow of an exhaust gas, and a diesel jet injector is provided at a front end of the NOx lowering catalyst section.

An exhaust gas purification device is disclosed in Patent Document 5 (JP 2009-112962 A), which purifies an exhaust gas emitted from an internal combustion engine and includes a gas channel through which the exhaust gas circulates and a particulate filter that is provided for the gas channel and is formed with numerous pores, wherein an almost entire introduction face of the particulate filter brought into contact with the exhaust gas is covered with a microporous material in which micropores having a smaller diameter than the pores are formed, and the microporous material includes a support composed of an oxide having oxygen storage/release capacity and a catalyst containing Ag loaded on the support.

An oxidation catalyst device for purifying an exhaust gas is disclosed in Patent Document 6 (JP 2010-42396 A), which includes: a porous filter base material having a wall flow structure in which one end is used as an exhaust gas inflow section and the other end is used as an exhaust gas outflow section; and a catalyst loaded on the porous filter base material, wherein: the porous filter base material includes multiple inflow cells in which multiple through-holes formed through the base material in an axial direction are opened at the exhaust gas inflow section and are closed at the exhaust gas outflow section, multiple outflow cells in which the multiple through-holes are closed at the exhaust gas inflow section and are opened at the exhaust gas outflow section, and cell dividing walls between the inflow cells and the outflow cells; the catalyst is made up of a first catalyst layer loaded on surfaces of the cell dividing walls which at least face toward the inflow cells and a second catalyst loaded on wall surfaces of the holes of the porous filter base material forming the cell dividing walls; while the exhaust gas of an internal combustion engine which flows in from the exhaust gas inflow section circulates into the outflow cells via the cell dividing walls, the exhaust gas purified by oxidizing particulate in the exhaust gas with the catalyst is caused to flow out of the exhaust gas outflow section; and the catalyst includes a composite metal oxide expressed by a general formula Y₁₋ₓAgₓMn_{1-y}Ti_{y}O₃, and a porous material of a mixture with zirconium oxide.

An oxidation catalyst device for purifying an exhaust gas is disclosed in Patent Document 7 (JP 2010-284583 A), which includes: a porous filter base material having a wall flow structure in which one end is used as an exhaust gas inflow section and the other end is used as an exhaust gas outflow section; and an oxidation catalyst composed of a composite metal oxide loaded on the porous filter base material, wherein: the oxidation catalyst is formed by applying an aqueous solution of a compound of multiple metals constituting the composite metal oxide to surfaces of the porous filter base material using any one of a spray-dray method, a spray pyrolysis method, and a freeze-drying method and firing the aqueous solution, covers the surfaces of the filter porous base material to which the exhaust gas flowing in from the exhaust gas inflow section is introduced, and is formed of a porous material having pores that are smaller in diameter than those of the porous filter base material; and the oxidation catalyst is formed of a composite metal oxide represented by any one of chemical formulae YMnO₃, Y₁₋ₓAgxMnO₃ (where 0.01 ≤ x 0.30), and Y₁₋ₓAgₓMn_{1-y}A_{y}O₃ (where 0.01 ≤ x ≤ 0.30, 0.005 ≤ y ≤ 0.30, and A is one selected from the group consisting of Ti, Nb, Ta, Ru, Ce, and Fe).

An exhaust gas purification filter for purifying particulate matter in an exhaust gas emitted from an internal combustion engine is disclosed in Patent Document 8 (JP 2011-152529 A), in which a silver coating is formed on surfaces of a filter base material, and further a catalyst is formed on the silver coating.

An exhaust gas purification device is disclosed in Patent Document 9 (JP 2012-36821 A), in which a first oxidation catalyst containing at least one precious metal selected from the group consisting of Pt, Pd, and Rh and/or an oxide of the precious metal, a sliver-containing DPF catalyst containing silver and/or a silver oxide, and a second oxidation catalyst containing at least one precious metal selected from the group consisting of Pt, Pd, and Rh and/or an oxide of the precious metal are disposed from an upstream side of an exhaust gas emitted from an internal combustion engine along a downstream side in that order.

### CITATION LIST

### PATENT DOCUMENT

Patent Document 1: JP 2003-286835 A
Patent Document 2: JP 2007-196135 A
Patent Document 3: JP 2007-315328 A
Patent Document 4: JP 2009-513335 W
Patent Document 5: JP 2009-112962 A
Patent Document 6: JP 2010-42396 A
Patent Document 7: JP 2010-284583 A
Patent Document 8: JP 2011-152529 A
Patent Document 9: JP 2012-36821 A

### DISCLOSURE OF THE INVENTION

### PROBLEM TO BE SOLVED BY THE INVENTION

When a silver catalyst layer containing silver is formed on a surface of a filter base material with which a circulating exhaust gas comes into contact, the silver in the silver catalyst layer is diffused to move into the base material when a temperature becomes high, and reacts with a base material component (for instance, SiO₂) so as to be made inactive. As such, there has been known a problem that PM combustion capacity is reduced, in particular, at a high temperature.

Further, when a precious metal catalyst layer containing a precious metal such as platinum is formed on the opposite surface of the base material on which the silver catalyst layer is formed, there has also been known a problem that the silver in the silver catalyst layer moves in the base material as described above, comes into contact with the precious metal in the precious metal catalyst, and disables catalyst activity of the precious metal.

Therefore, the invention is to propose a novel diesel particulate filter that has a structure in which a silver catalyst layer containing silver acting as a catalyst active component is formed on the surface of a filter base material with which a circulating exhaust gas comes into contact, and makes it possible to suppress diffusivity of the silver and to achieve stable PM combustion capacity, in particular, at a high temperature.

### MEANS FOR SOLVING PROBLEM

The invention proposes a diesel particulate filter (DPF) in which an exhaust gas circulates into dividing walls of a filter base material and which has a structure in which a silver catalyst layer including a silver alloy containing silver and palladium as a catalyst active component is formed on a partial or entire surface of each dividing wall which is located at an inflow side of the exhaust gas.

The invention proposes, as a preferred example, a DPF having a structure in which gas inflow cells that are formed to open an upstream side of an exhaust gas and to block a downstream side of the exhaust gas, and gas outflow cells that are formed to block the upstream side of the exhaust gas and to open the downstream side of the exhaust gas are provided to be adjacent to each other via base material dividing walls, wherein the DPF has a silver catalyst layer including silver, a silver alloy, or both of them on a partial or entire surface of each dividing wall of the gas inflow cells.

### EFFECT OF THE INVENTION

The DPF which the invention proposes is configured to add palladium to silver to make a silver alloy, and form a silver catalyst layer on a surface of each dividing wall of a filter base material which is located at an inflow side of the exhaust gas using the silver alloy. Thereby, it is possible to suppress diffusivity of the silver in the silver catalyst layer at a high temperature, and to achieve stable PM combustion capacity at a high temperature.

### BRIEF DESCRIPTION OF DRAWINGS

Fig. 1 is a schematic perspective view illustrating an example of a diesel particulate filter (DPF) of the invention;
Fig. 2 is an enlarged cross-sectional view illustrating a part of the DPF illustrated in Fig. 1;
Fig. 3 is an enlarged cross-sectional view illustrating a part of the DPF according to a modification of Fig. 1;
Fig. 4 is an enlarged cross-sectional view illustrating a part of the DPF according to a modification of Fig. 3; and
Fig. 5 is a schematic cross-sectional view illustrating an example of an exhaust gas purification device of the invention.

### MODE(S) FOR CARRYING OUT THE INVENTION

Hereinafter, a diesel particulate filter (referred to as "the present DPF") 1 acting as an example of an embodiment of the invention will be described.

### <The present DPF>

The present DPF 1 is a diesel particulate filter that has a structure in which a silver catalyst layer 5 including a silver alloy containing silver and palladium as a catalyst active component is formed on a partial or entire surface of each dividing wall 2a which is located at an inflow side of an exhaust gas at a filter base material 2.

The present DPF 1 allows the exhaust gas to circulate inside the dividing wall 2a of the filter base material 1, can collect particulate matter (PM) in the exhaust gas on the surface of the dividing wall 2a when the exhaust gas circulates inside the dividing wall 2a, and allows the collected PM to be burnt by combustion catalysis of the silver at the silver catalyst layer 5.

### (Base material)

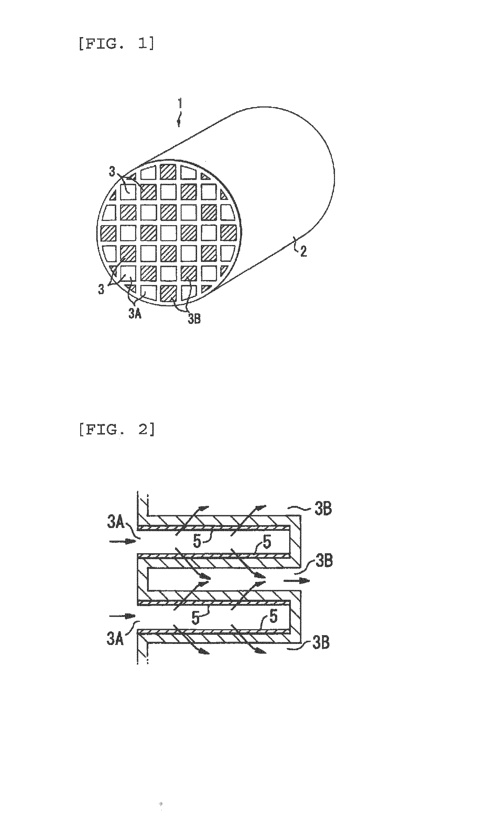

As illustrated in Figs. 1 and 2, the filter base material 2 making up a framework of the present DPF exhibits a honeycomb structure, and has multiple cells 3 communicating in a flow direction of the exhaust gas. The cells 3 are mutually partitioned by the dividing walls, and ends of the neighboring cells are mutually sealed. Thereby, the gas inflow cells 3A that are formed to open an upstream side of the exhaust gas and to block a downstream side of the exhaust gas, and the gas outflow cells 3B that are formed to block the upstream side of the exhaust gas and to open the downstream side of the exhaust gas are adapted to have a structure in which they are adjacently disposed via the base material dividing walls 2a.

However, a shape of the filter base material 2 of the present DPF is not limited to the shape as described above. For example, a known base material such as a wall through type, a flow through honeycomb type, a wire mesh type, a ceramic fiber type, a metal porous material type, a particle filling type, or a foam type may be employed as the DPF.

A material of the filter base material 2 may be a porous material formed of a refractory material such as ceramic or a metal material.

The material of the ceramic base material may include refractory ceramic materials, for instance silicon carbide (SiC), cordierite, cordierite-alpha alumina, silicon nitride, zircon mullite, spodumene, alumina-silica magnesia, zirconium silicate, sillimanite, magnesium silicate, zircon, petalite, alpha alumina, and aluminosilicates.

The material of the metal base material may include refractory metals, for instance a stainless alloy, a Fe-Cr-Al alloy, mullite, alumina, and aluminum titanate.

Among them, the silicon carbide (SiC) is particularly preferred from the viewpoint of a permeation control effect that Fe is inhibited from permeating into the base material due to Pd.

A density with which the cells 3 are formed is not particularly limited, but 10 to 100 cells per 1 cm² of base material cross section are preferably formed.

A thickness of the dividing wall 2a is not particularly limited, but it is preferably within a range of 10 µm to 300 µm.

### (Silver catalyst layer)

In the present DPF, the silver catalyst layer 5 including the silver alloy containing silver and palladium as the catalyst active component is formed on a partial or entire surface of each dividing wall 2a which is located at the inflow side of the gas at the filter base material 2.

For example, in the case of the filter base material 2 illustrated in Figs. 1 and 2, the silver catalyst layer 5 is preferably formed on the partial or entire surface of the dividing wall of each gas inflow cell 3A. In this case, the silver catalyst layer 5 may be formed on the surface of the dividing wall 2a through which the exhaust gas flows among the dividing walls of the gas inflow cells 3A.

The silver in the silver catalyst layer 5 is preferably contained at a rate of 1 g/L or more with respect to a base material volume, more preferably 1.5 g/L or more or 10 g/L or less, and still more preferably 2.0 g/L or more.

In the silver alloy containing silver and palladium, a ratio of the silver to the palladium is preferably 99 : 1 to 1 : 3.

When 1 wt% or more palladium is contained with respect to the silver, diffusion of the silver can be more effectively suppressed at a high temperature. Further, in the case of 75 wt% or less, there is no obstacle to a catalyst activity effect of the silver.

From such a viewpoint, the ratio of the silver to the palladium is more preferably 5 : 1 to 1 : 3.

The silver alloy may contain elements other than the silver and the palladium as far as the elements do not obstruct the effects of the silver and the palladium. For example, the silver alloy may contain either at least one selected from the group consisting of Nb, La, Fe, Y, Pr, Ba, Ca, Mg, Sn, and Sr or an oxide thereof. In this case, in terms of not obstructing the effects of the silver and the palladium, a content thereof is preferably set to 1 to 35% by mass.

As for the silver catalyst layer 5, the silver alloy containing the silver and the palladium is preferably kept loaded on an inorganic porous material.

Here, the inorganic porous material may include, for instance, an inorganic porous material selected from the group consisting of silica, alumina, and titania compounds, or a porous material composed of an oxygen storage/release capacity (OSC) material such as a cerium compound, a zirconium compound, or a ceria-zirconia composite oxide.

To be more specific, the inorganic porous material may include a porous material composed of a compound selected from, for example, alumina, silica, silica-alumina, alumino-silicates, alumina-zirconia, alumina-chromia, and alumina-ceria.

Above all, the inorganic porous material composed of a cerium-zirconium composite oxide in which a cerium oxide has an amount of 5 to 50% by weight is particularly preferred. When the amount of the cerium oxide is not more than 50% by weight, this is preferred because a support is not reduced in specific surface area even when the inorganic porous material is heated to a high temperature, for instance a temperature of 700°C or higher, and because it is possible to prevent a catalyst from being deteriorated by heat.

Further, the inorganic porous material may contain an oxide of at least one selected from the group consisting of Nb, La, Fe, Y, Pr, Ba, Ca, Mg, Sn, and Sr.

The silver catalyst layer 5 may include another component, for instance a binder component or a stabilizer component.

The binder component may include at least one selected from the group consisting of SiO₂, TiO₂, ZrO₂, and Al₂O₃.

The stabilizer may include, for instance, an alkaline earth metal or an alkaline metal. Above all, one or two or more metals selected from magnesium, barium, boron, thorium, hafnium, silicon, calcium, potassium, sodium, cesium, and strontium may be employed.

The silver catalyst layer 5 preferably has a thickness of 70 µm or less. If the silver catalyst layer 5 is too thick, a chance to bring the silver in the silver catalyst layer and the exhaust gas into contact with each other is reduced, and thus decomposition efficiency is reduced. On the other hand, if the silver catalyst layer 5 is too thin, heat resistance is reduced. From such a viewpoint, the thickness of the silver catalyst layer is more preferably 5 µm or more or 50 µm or less, and still more preferably 10 µm or more or 40 µm or less.

A surface of the silver catalyst layer 5 may be formed so as to have concavities and convexities. For example, a surface concavo-convex section having an average thickness that is equal to or more than 50% of the thickness of the silver catalyst layer 5 may be adapted to be formed on the surface of the silver catalyst layer 5.

If such a surface concavo-convex section is formed on the surface of the silver catalyst layer 5, the exhaust gas flows through a gap caused by the surface concavo-convex section. As such, it is possible to inhibit a back pressure from being raised by the exhaust gas, and to improve combustion efficiency of the accumulated PM particles as well.

From such a viewpoint, the average thickness of the surface concavo-convex section is preferably equal to or more than 50% of the thickness of the silver catalyst layer 5, more preferably equal to or more than 60%, still more preferably equal to or more than 65%, and most preferably equal to or more than 75% or equal to or less than 95%.

The average thickness of the surface concavo-convex section of the silver catalyst layer 5 is an average value of a height from the bottom of the lowest of the concavities to the convexities as described above. When measured, the average thickness may be measured using, for instance, "3D Real Surface View Microscope VE-8800" made by Keyence Corporation.

As a measurement principle, a scanning electron microscope (SEM) image is taken with a sample held horizontal first, and then another SEM image is taken with the sample inclined at a given angle (θ). In this way, by inclining the sample at θ, measuring a movement distance of a on the observed image to obtain a height of a, automatically extracting and calculating tens of thousands of points corresponding to a from the observed image, and establishing a 3D image, the average thickness of the surface concavo-convex section is measured.

As a method of forming the silver catalyst layer 5 equipped with such a surface concavo-convex section, an inorganic porous material powder such as silica or alumina is added to and mixed with a silver solution in which raw materials of the silver catalyst layer 5, for instance silver and palladium, are dissolved, and is wet-pulverized to obtain a pulverized slurry, and another component such as a binder component or a stabilizer component is added to the pulverized slurry as needed to prepare a coating composition. The coating composition is coated and fired to be able to form the silver catalyst layer 5.

In this case, pulverizing energy when the slurry is wet-pulverized is controlled, and thereby the average thickness of the surface concavo-convex section of the silver catalyst layer 5 can be adjusted. For example, when the slurry is pulverized using a ball mill, the pulverizing energy may be controlled by adjusting a size of the ball mill, a number percentage, the number of rotations, and a rotational time of the ball mill with respect to a slurry amount. When the pulverizing energy is increased, the average thickness of the surface concavo-convex section of the silver catalyst layer 5 can be reduced.

### (Precious metal catalyst layer)

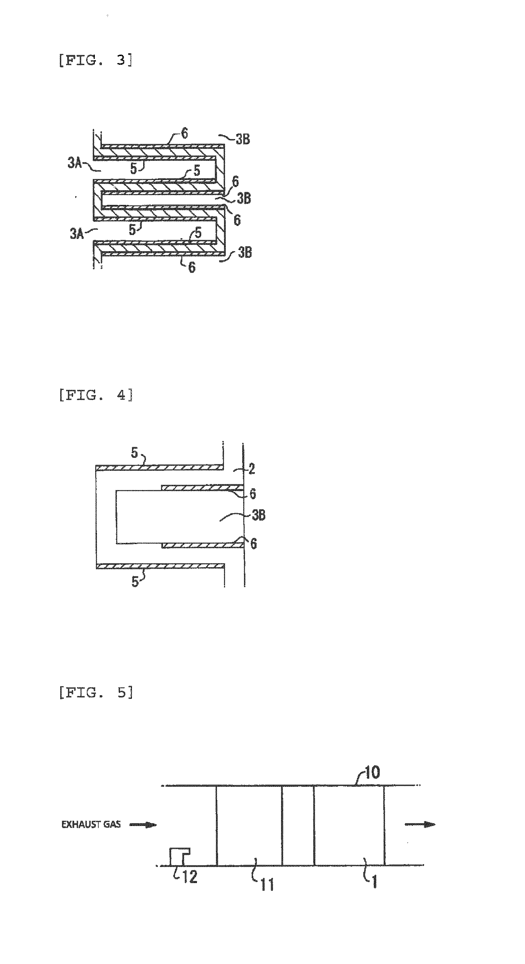

As illustrated in Fig. 3, the present DPF may be adapted so as to further laminate a precious metal catalyst layer 6 containing at least one precious metal selected from the group consisting of Pt, Pd and Rh and/or an oxide of the precious metal on the partial or entire surface of the dividing wall of each gas outflow cell 3B.

Further, as illustrated in Fig. 4, the precious metal catalyst layer 6 may be provided so as to be buried inward from the surface of the dividing wall of each gas outflow cell 3B. Further, a part of the precious metal catalyst layer 6 may be provided so as to be buried in the surface of the dividing wall of each gas outflow cell 3B.

As the precious metal catalyst layer 6 is provided for a part or whole of the dividing wall of each gas outflow cell 3B, CO or HC that is an unburnt component of fuel added to raise a temperature of the exhaust gas can be efficiently treated by the precious metal catalyst layer 6.

However, the precious metal catalyst layer 6 is preferably provided as needed, and does not necessarily have to be provided.

When the precious metal catalyst layer 6 is provided in this way and the silver is diffused to come into contact with the precious metal in the precious metal catalyst layer 6, the precious metal immediately loses catalyst activity. However, since the present DPF can suppress the diffusion of the silver, the precious metal can be prevented from being deactivated.

As the precious metal in the precious metal catalyst layer 6, any precious metal of Rh, Pt, Pd, Ir, and Au having higher electronegativity than the silver (Ag) is preferably employed alone or in combination. Especially, Rh, Pt, and Pd are preferred, and are preferably used alone or in combination.

The precious metal in the precious metal catalyst layer 6 is preferably contained at an amount ranging from 0.01 g to 10 g with respect to one liter of the volume of the porous base material, and more preferably between equal to or more than 0.1 g or equal to or less than 5 g. As the catalyst contains the precious metal at such an amount, the exhaust gas can be efficiently purified.

In the precious metal catalyst layer 6, the precious metal preferably exists in a state in which it is loaded on the inorganic porous material.

Here, the inorganic porous material may include an inorganic porous material selected from the group consisting of, for instance, silica, alumina, and titania compounds, or a porous material composed of an OSC material such as a cerium compound, a zirconium compound, or a ceria-zirconia composite oxide.

To be more specific, the inorganic porous material may include a porous material composed of a compound selected from, for example, alumina, silica, silica-alumina, alumino-silicates, alumina-zirconia, alumina-chromia, and alumina-ceria.

Above all, the inorganic porous material composed of a cerium-zirconium composite oxide in which a cerium oxide has an amount of 5 to 50% by weight is particularly preferred. When the amount of the cerium oxide exceeds 50% by weight, the specific surface area of the support is reduced when the inorganic porous material is heated to a high temperature, for instance a temperature of 700°C or higher, and finally there occurs a tendency to cause heat deterioration of the catalyst.

Further, the inorganic porous material may contain an oxide of at least one selected from the group consisting of Nb, La, Fe, Y, Pr, Ba, Ca, Mg, Sn, and Sr.

The precious metal catalyst layer 6 may include another component, for instance a binder component or a stabilizer component.

The binder component may include at least one selected from the group consisting of SiO₂, TiO₂, ZrO₂, and Al₂O₃.

The stabilizer may include, for instance, an alkaline earth metal or an alkaline metal. Above all, one or two or more metals selected from magnesium, barium, boron, thorium, hafnium, silicon, calcium, and strontium may be employed.

A thickness of the precious metal catalyst layer 6 preferably ranges from 10 µm to 100 µm. If the precious metal catalyst layer 6 is too thick, a chance to bring the catalyst active component in the precious metal catalyst layer 6 and the exhaust gas into contact with each other is reduced, and thus decomposition efficiency is reduced. On the other hand, if the precious metal catalyst layer 6 is too thin, heat resistance is reduced. From such a viewpoint, the thickness of the precious metal catalyst layer 6 is more preferably equal to or more than 10 µm or equal to or less than 70 µm, and still more preferably equal to or more than 20 µm or equal to or less than 50 µm.

### <Manufacturing method>

Next, an example of a method of manufacturing the present DPF will be described.

The silver catalyst layer 5 may be formed by adding powder of an inorganic porous material such as silica or alumina to a silver solution in which silver and palladium are dissolved, preparing a slurry, applying the slurry to a partial or entire surface of the filter base material, more particularly a partial or entire surface of the dividing wall of, for instance, each gas inflow cell 3A, drying the applied slurry, and firing or reducing the dried slurry, for instance, in an oxidizing atmosphere such as oxygen-enriched air in air, for instance, at 400 to 700°C. However, the method of forming the silver catalyst layer is not limited to such a method.

A silver solution may be prepared in which silver whose compound is dissolved in a solvent is dissolved.

As the silver compound, for instance, silver nitrate, silver acetate, or silver fluoride may be used. As the solvent, acetic acid or ammonia water may be used.

The silver compound is reduced to metal silver from a solution of a soluble silver compound, and the metal silver is precipitated on a support. Thereby, the silver is attached onto the support as a microscopic particle, and a surface area of the silver is thought to be increased. This effect is also considered to be obtained even when a support particle other than the aforementioned support particle is used, but it is particularly significant when the aforementioned support particle is used.

In this case, a reductant may include, for instance, hydrazine, hydrosulfite, sodium thiosulfate, formalin, potassium nitrite, potassium hydrogen nitrite, sodium nitrite, sodium hydrogen sulfite, ammonium, glucose, a ferrous citrate solution, tannic acid, hydrazine hydrate, ethylenediaminetetraacetic acid, sodium tetrahydroborate, and hypophosphorous acid.

With regard to formation of the silver catalyst layer 5, it is preferred that no silver solution is adapted to permeate into the base material as far as possible. The reason is that, if the silver in the silver solution permeates into the base material to react with, for instance, SiC, the silver is deactivated. However, since the base material is porous, it is inevitable that the silver solution permeates somewhat into the base material.

When the silver catalyst layer 5 is formed, as described above, the pulverizing energy when the slurry is wet-pulverized is controlled. Thereby, the surface concavo-convex section can be formed on the surface of the silver catalyst layer 5, and the average thickness of the surface concavo-convex section can be adjusted. For example, when the slurry is pulverized using a ball mill, the pulverizing energy may be controlled by adjusting a size of the ball mill, a number percentage, the number of rotations, and a rotational time of the ball mill with respect to a slurry amount. When the pulverizing energy is increased, the average thickness of the surface concavo-convex section of the silver catalyst layer 5 can be reduced.

On the other hand, the precious metal catalyst layer 6 may be formed by adding powder of an inorganic porous material such as silica or alumina to a silver solution in which a precious metal is dissolved, preparing a slurry, applying the slurry to a partial or entire surface of the filter base material, more particularly a partial or entire surface of the dividing wall of, for instance, each gas outflow cell 3B, drying the applied slurry, and firing the dried slurry. However, the method of forming the precious metal catalyst layer is not limited to such a method.

### <Present exhaust gas purification device>

Next, an exhaust gas purification device using the present DPF (referred to as "the present exhaust gas purification device") will be described.

For example, as illustrated in Fig. 5, the present exhaust gas purification device is preferably configured to dispose the present DPF 1 in a gas channel 10 through which an exhaust gas emitted from an internal combustion engine flows, dispose a first catalyst structure 11 containing at least one precious metal selected from Pt, Pd and Rh and/or an oxide of the precious metal at an upstream side of the present DPF 1, and further dispose a heating means 12 for adjusting a temperature of the exhaust gas at an upstream side of the first catalyst structure 11.

In this case, the present DPF 1 and the first catalyst structure 11 may be disposed in the same casing. Further, the present DPF 1 and the first catalyst structure 11 may be disposed in different casings.

### (First catalyst structure)

The first catalyst structure 11 may be formed using, for instance, a ceramic porous base material.

The ceramic porous base material may be formed of, for instance, cordierite, silicon carbide, or silicon nitride. Further, a metal honeycomb base material may be effectively used as a base material of a first oxidation catalyst 21.

As such a porous base material (including the metal honeycomb base material), a base material having a form in which numerous through-holes (cells) are formed in a longitudinal direction and each through-hole is partitioned with dividing walls can be preferably used.

A thickness (T) of each dividing wall is preferably within a range from 10 to 300 µm.

Further, the porous base material preferably has a wide contact area where it is in contact with the exhaust gas. A surface area of the base material is preferably within a range from 10 to 50 cm²/cm³.

Such a porous base material preferably uses a porous base material having 15 to 200 cells per cross section of 1 cm².

A diameter of such a porous base material may be appropriately adjusted to a diameter of a catalyst-containing exhaust gas channel. However, a porous base material having a diameter of about 90 to 98% of the exhaust gas channel diameter (inner diameter) that is a casing of a portion where the catalyst is provided is preferable because it is used with ease and furthermore almost all of exhaust gas comes into contact with the catalyst and is exhausted.

The first precious metal catalyst structure 11 preferably contains any precious metals of Rh, Pt, Pd, Ir, and Au alone or in combination. Above all, Rh, Pt, and Pd are preferred, and may be used alone or in combination.

The precious metal as described above is preferably contained in the first oxidation catalyst structure 11 at an amount ranging from 0.1 g to 10 g with respect to one liter of the volume of the porous base material, and more preferably from 1 g to 5 g. As the catalyst contains the precious metal at such an amount, the exhaust gas can be efficiently purified.

The catalyst component adhering to the porous base material preferably exists in a state in which it is loaded on the inorganic porous material.

Here, the inorganic porous material may include an inorganic porous material selected from the group consisting of, for instance, silica, alumina, and titania compounds, or a porous material composed of an OSC material such as a cerium compound, a zirconium compound, or a ceria-zirconia composite oxide.

The first oxidation catalyst may contain alumina or alumina composite oxide by which heat resistance is further reinforced.

### (Heating means)

When the PM in exhaust gas is collected and accumulated on the surface of the present DPF, PM collecting capability of the DPF is reduced. As such, it is necessary to burn the PM accumulated on the surface of the present DPF with proper timing and to recycle the present DPF.

In the exhaust gas from the internal combustion engine, the PM is included, and the catalyst does not effectively act at a temperature of 500°C or lower. A temperature of the exhaust gas from the internal combustion engine ranges from about 150 to 180°C. Since soot (PM) cannot be burnt at such a temperature, the temperature of the exhaust gas is raised to 550°C or higher at which the soot is burnt, and preferably from 600 to 650°C. Thereby, the soot (PM) accumulated on the silver catalyst layer of the present DPF can be effectively burnt by catalysis of the silver, and the present DPF can be recycled in a short time.

The heating means 12 may include, for instance, a means for directly spraying fuel used in the internal combustion engine.

Further, the present exhaust gas purification device may be configured to further dispose an NOx treating catalyst (not illustrated). As the NOx treating catalyst is disposed, most of NOx can be treated and exhausted as N2.

The NOx catalyst used here may use a urea selective catalytic reduction (SCR) catalyst or an NOx catalyst that is typically used.

### <Description of terminology>

In the case of being expressed herein as "X to Y" (X and Y are arbitrary numbers), unless otherwise stated, the expression includes the meaning of "preferably more than X" or "preferably less than Y" along with the meaning "equal to or more than X and equal to or less than Y."

Further, in the case of being expressed as "equal to or more than X" (X is an arbitrary number) or "equal to or less than Y" (Y is an arbitrary number), the expression also includes the intention of being "preferably more than X" or "preferably less than Y."

### EXAMPLES

Hereinafter, the invention will be described in greater detail based on the following Examples and Comparative Examples.

### (Example 1)

A silver nitrate aqueous solution and a palladium nitrate aqueous solution were impregnated with Al₂O₃ (80 parts by mass) and were evaporated to dryness at 120°C. The material was fired at 800°C for 20 hours, and Ag and Pd were alloyed to obtain AgPd alloy particulate firing catalyst powder. In this case, a mole ratio between Ag and Pd at the AgPd alloy was 99 : 1.

200 g of the AgPd alloy particulate combustion powder, 500 g of an alumina sol having an alumina concentration of 20% by mass, and 300 g of deionized water were mixed and were wet-pulverized by a ball mill, thereby obtaining an AgPd slurry. Here, the ball mill used was alumina ball mills (size of 20 nm) as media (balls), and set such that a number percentage of the ball mill with respect to an amount of the slurry was 30%, the number of rotations was 40 rpm, and a time of rotation was 5 hours.

Paraffin dissolved by heat was impregnated with a SiC DPF (300 cells per square inch and a wall thickness of 12 mil) having a diameter of 143.8 mm and a length of 152.4 mm up to a position of 80% from an inlet side of the DPF in a lengthwise direction, and the extra paraffin was removed by suction. Afterwards, the DPF was cooled to cure the paraffin. Thereby, pores in dividing walls up to the position of 80% from the inlet side of the DPF in the lengthwise direction were filled with the paraffin. In order that air and the slurry were adapted to flow in the cells, 20% cell walls at an outlet side of the DPF were not filled.

A pressure was reduced from the outlet side of the DPF, and the AgPd slurry was pushed from the inlet side of the DPF and was injected into gas inflow cells. The surplus slurry was removed by suction. The slurry was dried at 70°C for 3 hours, was fired to remove the paraffin at 500°C for one hour, and an AgPd alloy particulate combustion catalyst was obtained by forming a silver catalyst layer including an AgPd alloy on an entire surface of the dividing walls up to the position of 80% from an inlet side of the gas inflow cells in a lengthwise direction.

In this case, a thickness of the silver catalyst layer was 30 µm.

### (Comparative Example 1)

Instead of forming the silver catalyst layer including the AgPd alloy in Example 1, only a silver nitrate aqueous solution was impregnated, and a Pd-free silver catalyst layer having the same amount as the silver catalyst layer including the AgPd alloy was formed to obtain an Ag particulate combustion catalyst.

In this case, a thickness of the silver catalyst layer was 30 µm.

### (Comparative Example 2)

Instead of forming the silver catalyst layer including the AgPd alloy in Example 1, only a Pt nitrate aqueous solution was impregnated, and a Pt particulate combustion catalyst was obtained by forming a Pt catalyst layer having the same amount as the silver catalyst layer including the AgPd alloy.

In this case, a thickness of the Pt catalyst layer was 30 µm.

### (Example 2)

Like Example 1, an AgPd alloy particulate combustion catalyst was obtained by forming a silver catalyst layer including an AgPd alloy.

Subsequently, 200 g of Pt powder, 500 g of an alumina sol having an alumina concentration of 20% by mass, and 300 g of deionized water were mixed and were wet-pulverized by a ball mill, thereby obtaining a Pt slurry. Here, the ball mill used was alumina ball mills (size of 20 nm) as media (balls), and set such that a number percentage of the ball mill with respect to an amount of the slurry was 30%, the number of rotations was 40 rpm, and a time of rotation was 5 hours.

Paraffin dissolved by heat was impregnated up to a position of 80% from the outlet side of the DPF in a lengthwise direction, and the extra paraffin was removed by suction. Afterwards, the DPF was cooled to cure the paraffin. Thereby, pores in dividing walls up to the position of 80% from the outlet side of the DPF in the lengthwise direction were filled with the paraffin. In order that air and the slurry were adapted to flow in the cells, 20% cell walls at the inlet side of the DPF were not filled.

A pressure was reduced from the inlet side of the DPF, and the Pt slurry was pushed from the outlet side of the DPF and was injected into gas outflow cells. The surplus slurry was removed by suction. The slurry was dried at 70°C for 3 hours, was fired to remove the paraffin at 500°C for one hour, and the AgPd alloy particulate combustion catalyst was obtained by forming a Pt catalyst layer including Pt on an entire surface of the dividing walls up to the position of 80% from an outlet side of the gas outflow cells in a lengthwise direction.

In this case, the Pt was contained at 0.5 g/L with respect to a volume of a base material.

### (Examples 3 to 13 and Comparative Example 3)

Except that a mole ratio between Ag and Pd at the AgPd alloy was changed as in Table 2, an AgPd alloy particulate combustion catalyst was obtained similar to Example 2.

### (Comparative Examples 4 to 9)

Like Example 1, an AgPd slurry was obtained by changing a mole ratio between Ag and Pd at the AgPd alloy as in Table 2. Subsequently, the AgPd slurry was impregnated with a SiC DPF (300 cells per square inch and a wall thickness of 12 mil) having a diameter of 143.8 mm and a length of 152.4 mm up to a position of 80% from an inlet side of the DPF in a lengthwise direction, was dried and fired to obtain an AgPd alloy particulate combustion catalyst in which alloys containing silver and palladium were scattered from a surface to an interior of base material dividing walls up to a position of 80% from an inlet side of gas inflow cells.

Subsequently, as Example 2, an AgPd alloy particulate combustion catalyst was obtained by forming a Pt catalyst layer containing Pt on an entire surface of the dividing walls up to a position of 80% from an outlet side of gas outflow cells in a lengthwise direction.

### <PM burning rate test>

The particulate combustion catalysts manufactured in Examples and Comparative Examples were subjected to durability treatment in an electric furnace at 900°C for 75 hours. With respect to the particulate combustion catalysts (indicated by "Fresh" in Table) that were not subjected to the durability treatment at 900°C and the particulate combustion catalysts (indicated by "900°C durability" in Table) that were subjected to the durability treatment at 900°C, a PM burning rate (g/min) was measured according to the following method. The measured results are shown in Tables 1 and 2.

A cordierite honeycomb type oxidation catalyst (an amount of loaded Pt: 2.4 g/L and an amount of loaded Pd: 0.6 g/L) having a diameter of 143.8 mm and a length of 76.2 mm was installed at an upstream side of a mid-exhaust pipe of 2.4 L diesel engine, and the particulate combustion catalysts manufactured in Examples and Comparative Examples were disposed at a downstream side of the mid-exhaust pipe.

The diesel engine was operated with the number of rotations of 1100 rpm and a load of 140 Nm for one hour, and the PM in the exhaust gas was accumulated by 4 g per one liter of the particulate combustion catalyst.

Afterwards, 0.97 L/h of diesel oil (JIS 2) was sprayed from an upstream side of the honeycomb type oxidation catalyst, and a diesel oil component was burnt by the oxidation catalyst. Thereby, a temperature of the exhaust gas at an inlet of the particulate combustion catalyst was maintained at 600°C for 10 minutes. Thereby, the PM accumulated on the particulate combustion catalyst was able to be burnt. At this time, a mass variation of the particulate combustion catalyst was measured before and after the PM was burnt, and the PM burning rate (g/min) was calculated from the measured value.

A decision was given by the following criteria, and the decided results are shown in Tables 1 and 2.
○○○: 0.95 g/min or more
○○: 0.83 g/min or more and less than 0.95 g/min
○: 0.80 g/min or more and less than 0.83 g/min
Δ: 0.60 g/min or more and less than 0.80 g/min
×: less than 0.60 g/min

### <CO/THC oxidation performance evaluation test>

The particulate combustion catalysts manufactured in Examples and Comparative Examples were subjected to durability treatment in an electric furnace at 700°C for 75 hours, and then pretreatment was performed by operating the diesel engine with the number of rotations of 2600 rpm and a load of 140 Nm for 10 minutes. Afterwards, a temperature was raised or lowered according to a change in load, and purification performance for each component (T₅₀) was measured.

A decision was given by the following criteria, and the decided results are shown in Table 2.

In the case of CO (°C)
○○○: 130°C or lower
○○: higher than 130°C and 135°C or lower
○: higher than 135°C and 140°C or lower
Δ: higher than 140°C and 145°C or lower
×: higher than 145°C

In the case of THC (°C)
○○○: 135°C or lower
○○: 135°C or higher and 140°C or lower
○: higher than 140°C and 145°C or lower
Δ: higher than 145°C and 150°C or lower
X: higher than 150°C

"g/L" of Ag and Pd shown in Tables 1 and 2 below indicates mass (g) by which Ag is loaded in terms of 1 L of the base material.

In the "coated state" in Tables 1 and 2, the term "membrane" refers to a state in which a surface layer including an alloy containing silver and palladium is formed on the surface of the base material dividing wall in a thin film shape, the term "normal" refers to a state in which the alloys containing silver and palladium are loaded in a scattered state from the surface to the interior of the base material dividing wall.

In Tables 1 and 2, "CO (°C) " and "THC (°C) " refer to a 50% purification temperature (T₅₀).

**[Table 1]**

| | | | Coated state | PM burning rate Decision | | |
|---|---|---|---|---|---|---|
| | Ag | Pd | | Fresh | 900°C durability | PM combustion |
| | g/L | g/L | | g/min | g/min | g/min |
| Example 1 | 2.475 | 0.025 | Membrane | 1.00 | 0.87 | ○○ |
| Comparative Example 1 | 2.500 | 0 | Membrane | 1.00 | 0.79 | Δ |
| Comparative Example 2 | 0.000 | Pt 0.5 | Membrane | 0.52 | 0.40 | □× |

**[Table 2]**

| | | | Coated state | PM burning rate | | +Pt combination (durability) | | Decision | | |
|---|---|---|---|---|---|---|---|---|---|---|
| | Ag | Pd | | Fresh | 900°C durability | CO | THC | PM combustion | CO/THC THC oxidation performance | Total |
| | g/L | g/L | | g/min | g/min | °C | °C | g/min | | |
| Comparative Example 3 | 2.500 | 0 | Membrane | 1.00 | 0.79 | 146 | 158 | Δ | × | × |
| Example 2 | 2.475 | 0.0 25 | Membrane | 1.00 | 0.87 | 136 | 141 | ○○ | ○ | ○ |
| Example 3 | 2.500 | 0.2 5 | Membrane | 1.00 | 0.90 | 133 | 138 | ○○ | ○○ | ○○ |
| Example 4 | 2.500 | 0.5 | Membrane | 1.00 | 1.00 | 124 | 130 | ○○○ | ○○○ | ○○○ |
| Example 5 | 2.500 | 1 | Membrane | 1.00 | 1.00 | 110 | 125 | ○○○ | ○○○ | ○○○ |
| Example 6 | 2.500 | 2.5 | Membrane | 1.00 | 0.95 | 105 | 120 | ○○○ | ○○○ | ○○○ |
| Example 7 | 2.500 | 7.5 | Membrane | 1.00 | 0.85 | 110 | 125 | ○○ | ○○○ | ○○ |
| Comparative Example 4 | 2.500 | 0 | Normal | 0.95 | 0.37 | 189 | 500 or more | × | × | × |
| Comparative Example 5 | 2.500 | 0.2 5 | Normal | 0.96 | 0.41 | 180 | 500 or more | × | × | × |
| Comparative Example 6 | 2.500 | 0.5 | Normal | 0.95 | 0.60 | 174 | 500 or more | Δ | × | × |
| Comparative Example 7 | 2.500 | 1 | Normal | 0.98 | 0.70 | 165 | 500 or more | Δ | × | × |
| Comparative Example 8 | 2.500 | 2.5 | Normal | 0.94 | 0.68 | 158 | 500 or more | Δ | × | × |
| Comparative Example 9 | 2.500 | 7.5 | Normal | 0.94 | 0.68 | 155 | 500 or more | Δ | × | × |
| Example 8 | 10.00 0 | 0.5 | Membrane | 1.00 | 1.00 | 126 | 133 | ○○○ | ○○○ | ○○○ |
| Example 9 | 5.000 | 0.5 | Membrane | 1.00 | 1.00 | 127 | 131 | ○○○ | ○○○ | ○○○ |
| Example 10 | 2.500 | 0.5 | Membrane | 1.00 | 1.00 | 124 | 130 | ○○○ | ○○○ | ○○○ |
| Example 11 | 2.000 | 0.5 | Membrane | 1.00 | 0.95 | 124 | 129 | ○○○ | ○○○ | ○○○ |
| Example 12 | 1.500 | 0.5 | Membrane | 1.00 | 0.83 | 120 | 129 | ○○ | ○○○ | ○○ |
| Example 13 | 1.000 | 0.5 | Membrane | 0.93 | 0.82 | 120 | 128 | ○ | ○○○ | ○ |

The DPFs of Examples are configured to form the silver catalyst layer on the surface of the dividing wall of the base material, and to add the palladium to the silver so as to be alloyed to suppress diffusivity of the silver at a high temperature. As such, the silver can be inhibited from being deactivated. For this reason, it could be confirmed that, even after the durability treatment at 900°C, the PM burning rate can be inhibited from being lowered.

In contrast, when the silver alloys obtained by adding the palladium to the silver were loaded inside the dividing wall of the base material, the PM burning rate was remarkably lowered after the durability treatment at 900°C. This can be considered to be the reason why the silver alloys are loaded inside the dividing walls of the base material and thereby the silicon (Si) and the silver in the base material are in an environment which is easy for them to come into contact with each other.

Further, it could be recognized as expected that, even when the silver catalyst layer is formed on the surface of the dividing wall of the base material, but when the palladium was not added, the PM burning rate was also remarkably lowered after the durability treatment at 900°C.

### (Example 14)

A silver nitrate aqueous solution and a palladium nitrate aqueous solution were impregnated with Al₂O₃ (80 parts by mass) and were evaporated to dryness at 120°C. The material was fired at 800°C for 20 hours, and Ag and Pd were alloyed to obtain AgPd alloy particulate firing powder. In this case, a mole ratio between Ag and Pd at the AgPd alloy was 99 : 1.

200 g of the AgPd alloy particulate combustion powder, 500 g of an alumina sol having an alumina concentration of 20% by mass, and 300 g of deionized water were mixed and were wet-pulverized by a ball mill, thereby obtaining an AgPd slurry.

Here, the ball mill used was alumina ball mills (size of 5 mm) as media (balls), and set such that a number percentage of the ball mill with respect to an amount of the slurry was 30%, the number of rotations was 20 rpm, and a time of rotation was 5 hours.

Paraffin dissolved by heat was impregnated with a SiC DPF (300 cells per square inch and a wall thickness of 12 mil) having a diameter of 143.8 mm and a length of 152.4 mm up to a position of 80% from an inlet side of the DPF in a lengthwise direction, and the extra paraffin was removed by suction. Afterwards, the DPF was cooled to cure the paraffin. Thereby, pores in dividing walls up to the position of 80% from the inlet side of the DPF in the lengthwise direction were filled with the paraffin. In order that air and the slurry were adapted to flow in the cells, 20% cell walls at an outlet side of the DPF were not filled.

A pressure was reduced from the outlet side of the DPF, and the AgPd slurry was pushed from the inlet side of the DPF and was injected into gas inflow cells. The surplus slurry was removed by suction. The slurry was dried at 70°C for 3 hours, was fired to remove the paraffin at 500°C for one hour, and a particulate filter (sample) was obtained by forming a silver catalyst layer having a surface concavo-convex section on an entire surface of the dividing walls up to the position of 80% from an inlet side of the gas inflow cells in a lengthwise direction.

In this case, a thickness of the silver catalyst layer was 30 µm.

### (Example 15)

Except that, in Example 14, the conditions of the ball mill were changed into alumina ball mills (size of 5 mm) and into conditions that the number percentage of the ball mill with respect to the amount of the slurry was 30%, the number of rotations was 30 rpm, and the time of rotation was 5 hours, a particulate filter (sample) was obtained on the same conditions as Example 14. In this case, a thickness of the silver catalyst layer was 30 µm.

### (Example 16)

Except that, in Example 14, the conditions of the ball mill were changed into alumina ball mills (size of 10 mm) and into conditions that the number percentage of the ball mill with respect to the amount of the slurry was 30%, the number of rotations was 20 rpm, and the time of rotation was 5 hours, a particulate filter (sample) was obtained on the same conditions as Example 14. In this case, a thickness of the silver catalyst layer was 30 µm.

### (Example 17)

Except that, in Example 14, the conditions of the ball mill were changed similar to Example 1 and the like, that is, into alumina ball mills (size of 20 nm) and into conditions that the number percentage of the ball mill with respect to the amount of the slurry was 30%, the number of rotations was 40 rpm, and the time of rotation was 5 hours, a particulate filter (sample) was obtained on the same conditions as Example 14. In this case, a thickness of the silver catalyst layer was 30 µm.

### (Example 18)

Except that, in Example 14, the wet pulverizing based on the ball mill was changed into use of a disc mill (disc manufactured by Retsch), the number of rotations of 500 rpm, and the time of rotation of 10 minutes, a particulate filter (sample) was obtained on the same conditions as Example 14. In this case, a thickness of the silver catalyst layer was 30 µm.

### <Surface concavo-convex measurement of coating layer and thickness of the coating layer>

In the particulate filters (samples) obtained in Examples 14 to 18, an average thickness of a surface concavo-convex section (average value of concavity and convexity heights) of the silver catalyst layer was measured on the following conditions and procedures using "3D Real Surface View Microscope VE-8800" manufactured by Keyence Corporation as a measuring device.

### (Measurement conditions)

Magnification: 150X
WD: 16.6 mm
Accelerating voltage: 2kV
Detector: secondary electron detector
Degree of vacuum: high vacuum

### (Measurement procedures)

(1) The particulate filters (samples) obtained in Examples 14 to 18 were sampled to a size of height 1 cm × width 2 cm × depth 2 cm. Then, the surface of the silver catalyst layer was adapted to be located on a surface.
(2) An SEM image was taken in a horizontal state, and then another SEM image was taken with an angle inclined at 5 degrees.
(3) An average thickness of the surface concavo-convex section of the silver catalyst layer was calculated by device attached software from the taken SEM images.
(4) Subsequently, an SEM image was taken with a cell cross section of the sample adapted to face the surface (upper side).
(5) A thickness of the silver catalyst layer was calculated by the device attached software from the taken SEM image.
(6) A percentage (%) of the average thickness of the surface concavo-convex section of the silver catalyst layer with respect to the thickness of the silver catalyst layer, that is {(surface concavo-convex thickness)/(silver catalyst layer thickness)} × 100, was calculated from the numerical values calculated in (3) and (4).

### <Soot collecting back pressure measuring test>

With respect to the particulate filters (samples) obtained in Examples 14 to 18, a pressure drop increment ΔkPa/hr (where Δ: delta) was measured according to the following method. The measured results are shown in Table 3.

A cordierite honeycomb type oxidation catalyst (an amount of loaded Pt: 2.4 g/L and an amount of loaded Pd: 0.6 g/L) having a diameter of 143.8 mm and a length of 76.2 mm was installed at an upstream side of a mid-exhaust pipe of 2.4 L diesel engine, and the particulate filter (samples) obtained in Examples 14 to 18 were disposed at a downstream side of the mid-exhaust pipe.

The diesel engine was operated with the number of rotations of 1100 rpm and a load of 140 Nm for one hour, and an increment ΔkPa/hr from an initial pressure drop (a pressure drop before soot collection) to a pressure drop after the engine was operated for one hour (a pressure drop after soot collection) was measured, and the results are shown in Table 3.

Pressure drop increment (ΔkPa/hr) = (pressure drop after soot collection minus pressure drop before soot collection)/soot accumulation time

A decision was given by the following criteria, and the decided results are shown in Table 3.
○○○: 4.0 ΔkPa/hr or less
○○: 4.0 ΔkPa/hr or more and less than 5 ΔkPa/hr
○: 5.0 ΔkPa/hr or more and less than 6.5 ΔkPa/hr
Δ: 6.5 ΔkPa/hr or more

**[Table 3]**

| | Ag | Pt | Coated state | Percentage of thickness of surface concavo-convex section with respect to thickness of inorganic porous layer (%) | Pressure drop increment | Pressure drop incremental rate | PM combusion | CO/THC oxidation performance | Total |
|---|---|---|---|---|---|---|---|---|---|
| | g/L | g/L | | | | | | | |
| Example 14 | 2.5 | 0.5 | Membrane | 77.9 | 3.2 | ○○○ | ○○○ | ○○○ | ○○ ○ |
| Example 15 | 2.5 | 0.5 | Membrane | 68.9 | 4.2 | ○○ | ○○○ | ○○○ | ○○ ○ |
| Example 16 | 2.5 | 0.5 | Membrane | 55.0 | 6.0 | ○ | ○○○ | ○○○ | ○○ |
| Example 17 | 2.5 | 0.5 | Membrane | 46.1 | 9.0 | Δ | ○○○ | ○○○ | ○ |
| Example 18 | 2.5 | 0.5 | Membrane | 39.1 | 10.4 | Δ | ○○○ | ○○○ | ○ |

It was found that, as the surface concavo-convex section having an average thickness that is equal to or more than 50% of the thickness of the silver catalyst layer was formed on the surface of the silver catalyst layer formed on the surface of the DPF dividing wall, the exhaust gas flowed through the gap caused by the surface concavo-convex section, and thus the back pressure could be inhibited from being raised by the exhaust gas. Simultaneously, it was found that the combustion efficiency of the accumulated PM particles could also be improved.

## Claims

1. A diesel particulate filter in which an exhaust gas circulates into dividing walls of a filter base material, the diesel particulate filter having a structure in which a silver catalyst layer including a silver alloy containing silver and palladium as a catalyst active component is formed on a partial or entire surface of each dividing wall which is located at an inflow side of the exhaust gas.

2. A diesel particulate filter having a filter base material with a structure in which gas inflow cells that are formed to open an upstream side of an exhaust gas and to block a downstream side of the exhaust gas, and gas outflow cells that are formed to block the upstream side of the exhaust gas and to open the downstream side of the exhaust gas are provided to be adjacent to each other via base material dividing walls,
wherein the diesel particulate filter has a structure in which a silver catalyst layer including a silver alloy containing silver and palladium as a catalyst active component is formed on a partial or entire surface of each dividing wall of the gas inflow cells.

3. The diesel particulate filter according to claim 1 or 2, wherein a ratio between the silver and the palladium at the silver alloy containing silver and palladium ranges from 99 : 1 to 1 : 3.

4. The diesel particulate filter according to any one of claims 1 to 3, wherein the silver catalyst layer includes a catalyst support by which the silver alloy containing silver and palladium is loaded on an inorganic porous material.

5. The diesel particulate filter according to any one of claims 1 to 4, wherein the silver catalyst layer has a thickness of 70 µm or less.

6. The diesel particulate filter according to any one of claims 1 to 5, wherein the silver in the silver catalyst layer is contained at a rate of 1 g/L or more with respect to a volume of the base material.

7. The diesel particulate filter according to any one of claims 1 to 6, wherein the silver catalyst layer has a surface concavo-convex section, which has an average thickness that is equal to or more than 50% of a thickness of the silver catalyst layer, on a surface thereof.

8. The diesel particulate filter according to any one of claims 1 to 7, wherein a part or whole of each dividing wall of gas outflow cells includes a precious metal catalyst layer containing at least one precious metal selected from the group consisting of Pt, Pd and Rh and/or an oxide of the precious metal as a catalyst active component.

9. An exhaust gas purification device having the diesel particulate filter according to any one of claims 1 to 7.

10. An exhaust gas purification device having a catalyst structure containing at least one precious metal selected from the group consisting of Pt, Pd and Rh and/or an oxide of the precious metal at an upstream side of the diesel particulate filter according to any one of claims 1 to 9 in a gas channel along which the exhaust gas emitted from an internal combustion engine flows.

## Amended claims

### Amended claims under Art. 19.1 PCT

1. A diesel particulate filter in which an exhaust gas circulates into dividing walls of a filter base material, the diesel particulate filter having a structure in which a silver catalyst layer including a silver alloy containing silver and palladium as a catalyst active component is formed on a partial or entire surface of each dividing wall which is located at an inflow side of the exhaust gas.

2. A diesel particulate filter having a filter base material with a structure in which gas inflow cells that are formed to open an upstream side of an exhaust gas and to block a downstream side of the exhaust gas, and gas outflow cells that are formed to block the upstream side of the exhaust gas and to open the downstream side of the exhaust gas are provided to be adjacent to each other via base material dividing walls,
wherein the diesel particulate filter has a structure in which a silver catalyst layer including a silver alloy containing silver and palladium as a catalyst active component is formed on a partial or entire surface of each dividing wall of the gas inflow cells.

3. (New) The diesel particulate filter according to claim 1 or 2, wherein the silver catalyst layer is formed in a thin film shape.

4. (original claim 5) The diesel particulate filter according to any one of claims 1 to 3, wherein the silver catalyst layer has a thickness of 50 µm or less.

5. (Original claim 3) The diesel particulate filter according to any one of claims 1 to 4, wherein a ratio between the silver and the palladium at the silver alloy containing silver and palladium ranges from 99 : 1 to 1 : 3.

6. (Original claim 4) The diesel particulate filter according to any one of claims 1 to 5, wherein the silver catalyst layer includes a catalyst support by which the silver alloy containing silver and palladium is loaded on an inorganic porous material.

7. (Original claim 6) The diesel particulate filter according to any one of claims 1 to 6, wherein the silver in the silver catalyst layer is contained at a rate of 1 g/L or more with respect to a volume of the base material.

8. (Original claim 7) The diesel particulate filter according to any one of claims 1 to 7, wherein the silver catalyst layer has a surface concavo-convex section, which has an average thickness that is equal to or more than 50% of a thickness of the silver catalyst layer, on a surface thereof.

9. (Original claim 8) The diesel particulate filter according to any one of claims 1 to 8, wherein a part or whole of each dividing wall of gas outflow cells includes a precious metal catalyst layer containing at least one precious metal selected from the group consisting of Pt, Pd and Rh and/or an oxide of the precious metal as a catalyst active component.

10. (Original claim 9) An exhaust gas purification device having the diesel particulate filter according to any one of claims 1 to 9.

11. (Original claim 10) An exhaust gas purification device having a catalyst structure containing at least one precious metal selected from the group consisting of Pt, Pd and Rh and/or an oxide of the precious metal at an upstream side of the diesel particulate filter according to any one of claims 1 to 9 in a gas channel along which the exhaust gas emitted from an internal combustion engine flows.
